# EUROPÄISCHE PATENTSCHRIFT

(11) **EP 1 190 926 B1**
(45) Veröffentlichungstag und Bekanntmachung des Hinweises auf die Patenterteilung: **03.11.2010**
(21) Anmeldenummer: 01122872.3
(22) Anmeldetag: 24.09.2001
(51) Int. Cl.: B61F 5/24, B61F 5/14, B60G 17/015

(54) **Luftfederregelung und Luftfederung für ein Schienenfahrzeug**
Control of the pneumatic suspension and pneumatic suspension for a railway vehicle
Commande de la suspension pneumatiqe et suspension pneumatique pour un véhicule ferroviaire

(30) Priorität: 26.09.2000 DE 10047414
(43) Veröffentlichungstag der Anmeldung: 27.03.2002
(73) Patentinhaber: Bombardier Transportation GmbH, 10785 Berlin (DE)
(72) Erfinder: Morys, Bernhard, 13465 Berlin (DE)
(74) Vertreter: Cohausz & Florack

(56) Entgegenhaltungen:
- DE-A- 3 407 574
- GB-A- 2 344 323
- US-A- 4 693 185
- US-A- 4 715 289

## Beschreibung

Die Erfindung bezieht sich auf ein Verfahren zum Regeln einer Luftfederung für ein Schienenfahrzeug gemäß dem Oberbegriff des Patentanspruchs 1 und auf eine Luftfederung für ein Schienenfahrzeug gemäß dem Oberbegriff des Patentanspruchs 17.

Aus der DE-OS 20 55 220 ist eine Lokomotive mit einem Lokomotivkasten bekannt, welche über vier Luftfedern auf Drehgestellen abgestützt ist. Die Luftfedern sind in zwei Reihen rechts und links von der Längsachse des Fahrzeugkastens angeordnet und über Luftfederungsventile an eine Druckmittelquelle angeschlossen. Die Luftfederungsventile sind mit Eingangshebeln versehen, die durch vertikale Verbindungsstangen mit dem Drehgestell, beispielsweise den Radachsen verbunden. Je nach Bewegung einer Radachse wird dadurch Luft aus der zugehörigen Luftfeder abgelassen oder in diese eingeführt, wodurch der Lokomotivkasten stabilisiert wird. Parallel zu den Luftfederungsventilen sind die Luftfedern über elektromagnetische Ventile mit der Druckluftquelle und dem Freien verbunden, die von einem Regler angesteuert werden, um Druckluft in die Federn zuzuführen beziehungsweise aus den Federn abzublasen. Zur Betätigung des Reglers sind die Luftfederungsventile noch mit Wegmeßgebern versehen, die zu einem Abtasten der Stellung der betreffenden Radachsen dienen. Stellungsänderungen der Radachsen werden so dem Regler gemeldet, der die elektromagnetischen Ventile derart betätigt, daß einer Neigung des Fahrzeugkastens entgegen gewirkt wird. Eine Betätigung des Reglers kann immer dann erfolgen, wenn die Radachsen gegeneinander und gegenüber dem Fahrzeugkasten schräg stehen. Die Betätigung des Reglers ist andererseits beendet, sobald die Achsen zueinander parallel sind. Zur Verhinderung einer gegenseitigen Störung der normalen Betätigung der Luftfedern mit der Funktion des Reglers sind weitere Ventile zwischen den Federungsventilen und den Luftfedern vorgesehen, die vom Regler geschlossen werden, wenn die elektromagnetischen Ventile durch den Regler betätigt werden.

Die DE 196 47 998 A1 offenbart eine Luftfederung für Schienenfahrzeuge, bei der auf beiden Seiten der Fahrzeuglängsachse zwischen einem Fahrzeugaufbau und einem Drehgestell oder Fahrwerk jeweils ein Luftfederbalg angeordnet ist. Die Höhenlage des Fahrzeugaufbaues über der Schienenoberkante wird durch einen Höhengeber erfaßt, der ein elektrisches Meßsignal an eine Steuerelektronik liefert. Über ein durch die Steuerelektronik geregeltes elektropneumatisches Luftsteuerventil wird dem Luftfederbalg bei Vergrößerung der Zuladung über die Versorgungsleitung Druckluft zugeführt beziehungsweise bei Entladung abgelassen. Durch eine innerhalb der Steuerelektronik existierende Information darüber, ob das Fahrzeug steht oder fährt, wird durch ein einfaches Umschalten ermöglicht, die Ansprechzeit des Systems derart zu verändern, daß einerseits im Stand die exakte Einstellung der Höhenlage des Fahrzeugaufbaues, andererseits während der Fahrt ein Nichtreagieren auf beispielsweise Wankbewegungen erreicht werden.

Aus der GB 2 344 323 ist es weiterhin bekannt, in regelmäßigen Abständen eine Messung des Drucks in den einzelnen Luftfedern über einen zentralen Drucksensor zu Zeiten vorzunehmen, wenn der normale Regelbetrieb hierdurch nicht gestört ist.

Aus der EP 0 779 167 A2 und der EP 0 372 218 A2 sind jeweils Luftfederungen mit einer einfachen Niveauregulierung bekannt.

Der Erfindung liegt die Aufgabe zugrunde, ein Verfahren zum Regeln einer Luftfederung sowie eine Luftfederung für ein Schienenfahrzeug bereit zu stellen, welche die Einhaltung des Lichtraumprofiles und entweder eine Minimierung der Radlastdifferenzen je Fahrwerk des Schienenfahrzeugs oder die Verspannungsfreiheit des Wagenkastens gewährleistet und zwar auch bei Ausfall eines Sensors.

Die Aufgabe wird gelöst durch ein Verfahren gemäß dem Oberbegriff des Patentanspruchs 1, bei dem als Meßgrößen die Höhen und Drücke der Luftfedern aufgenommen werden, bei dem die Meßsignale auf Fehler geprüft werden, bei dem die Höhen-Meßwerte in einen Wagenkasten-bezogenen Wank- und/oder Nick- und/oder Torsions- und/oder Hubanteil transformiert werden, bei dem aus den Druck-Meßwerten auf den Wagenkasten wirkende vertikale Kräfte berechnet werden, bei dem die vertikalen Kräfte in ein Wagenkasten-bezogenes Wank- und/oder Nick- und/oder Torsionsmoment und/oder eine vertikale Gesamtkraft und/oder in je ein Fahrwerkbezogenes Kräfteverhältnis transformiert werden, und bei dem als Regelziele der Wankanteil kompensiert und/oder der Nickanteil kompensiert und/oder der Hubanteil auf einem bestimmten Sollwert gehalten und/oder entweder das Kräfteverhältnis je Fahrwerk minimiert oder das Torsionsmoment kompensiert werden sollen. Fehlerhafte meßwerte können dabei durch geschätzte meßwerte ersetzt werden. Das Kompensieren der Nick- beziehungsweise Wankbewegung bedeutet ein Ausgleichen einer Drehbewegung des Wagenkastens um die Fahrzeugquerbeziehungsweise -längsachse. Zusammen mit dem Halten des Hubanteiles auf einem bestimmten Sollwert garantieren diese Regelziele eine Einhaltung des Lichtraumprofiles des Schienenfahrzeuges, was ein sicheres Passieren von Gegenzügen und streckenseitigen Anordnungen sowie das Durchqueren von Tunneln ermöglicht. Aus den über die gemessenen Drücke bestimmten Luftfederkräften und eventuell vorhandenen Wankstützkräften können auf vorgebbare Angriffspunkte des Wagenkastens wirkende vertikale Kräfte bestimmt werden, aus welchen sich das auf den Wagenkasten wirkende Torsionsmoment ergibt. Mit dem Regelziel der Kompensation dieses Torsionsmoments kann die Verspannungsfreiheit des Wagenkastens eingestellt werden; stützt sich der Wagenkasten über mehrere Luftfedern auf ein Fahrwerk ab, so kann aus den vertikalen Kräften ein Kräfteverhaltnis je Fahrwerk abgeleitet werden, das die Lastverteilung auf die Luftfedern beispielsweise zu beiden Seiten der Fahrzeuglängsmittelebene widerspiegelt, und als Regelziel minimiert werden soll. Durch letzteres Regelziel können die seitlichen Radlastdifferenzen gering gehalten werden, was ein wesentliches Abnahmekriterium der Schienenfahrzeuge durch einen Betreiber darstellt.

In einer bevorzugten Ausführungsform der Erfindung wird der Betriebszustand des Schienenfahrzeugs durch Vergleichen von betriebsrelevanten Überwachungsgrößen mit jeweils zugeordneten Funktionsbereichen überwacht und bei Verlassen eines Funktionsbereichs eine entsprechende Warnmeldung ausgegeben. Durch diesen Verfahrensschritt wird die Betriebssicherheit des Schienenfahrzeugs wesentlich erhöht, in dem die unmittelbar aufgenommenen Meßgrößen, wie zum Beispiel die Drücke in den Luftfedern, oder daraus abgeleitete Größen, wie zum Beispiel die Regelzielgrößen oder auch das Wankmoment, fortwährend beobachtet werden, ob sie innerhalb vordefinierter Funktionsbereiche liegen. Wird eine der Grenzen der Funktionsbereiche überschritten, so wird eine Warnung beispielsweise an den Fahrer gemeldet, der dann durch Verringerung der Fahrgeschwindigkeit oder durch Anhalten des Schienenfahrzeugs reagieren kann, um den kritischen Betriebszustand zu beseitigen.

Zur Gewährleistung der Entgleisungssicherheit des Schienenfahrzeugs werden als betriebsrelevante Überwachungsgrößen vorzugsweise die Fahrwerk-bezogenen Kräfteverhältnisse und/oder das Wankmoment des Wagenkastens überwacht. Der Wankanteil und/oder der Nickanteil und/oder der Hubanteil des Wagenkastens werden als bevorzugte betriebsrelevante Größen zur Überwachung des vom Schienenfahrzeug eingenommenen Lichtraumes beobachtet. Zur Erfassung unsymmetrischer Beladungszustände oder einseitiger Windlasten wird vorteilhafterweise das um die Zentrifugalkraft-bedingte Querbeschleunigung des Wagenkastens bereinigte Wankmoment überwacht. Die Luftfederdrücke als betriebsrelevante Überwachungsgrößen werden zur Erkennung großer Leckagen oder des völligen Versagens eines Luftfederbalges überwacht.

In einer bevorzugten Ausgestaltung der Erfindung sind die Funktionsbereiche für die Überwachungsgrößen variabel in Abhängigkeit von Betriebsbedingungen des Schienenfahrzeugs. Die Definition, wann ein Betriebszustand eines Schienenfahrzeugs als kritisch anzusehen ist, kann von Betreiber zu Betreiber unterschiedlich sein, aber auch von den Betriebsbedingungen wie zum Beispiel Fahrgeschwindigkeit und Querbeschleunigung abhängig sein. Im Steuergerät können hierfür mehrere Sätze dynamischer Funktionsbereiche abgespeichert sein, so daß beispielsweise das Erfassen einer hohen Seitenwindlast bei einer niedrigen Geschwindigkeit als unkritisch bewertet wird, während dieselbe Last bei einer höheren Geschwindigkeit eine Warnmeldung an den Fahrer auslöst.

In einer vorteilhaften Ausführungsform der Erfindung wird ein von einem Sensor dem Steuergerät zugeführtes Meßsignal mittels einer im Steuergerät gespeicherten Kompensations-Kennlinie dieses Sensors korrigiert. Hierdurch können Ungenauigkeiten in den Meßsignalen korrigiert werden, die aus Ungenauigkeiten der Höhenbeziehungsweise Druck-Sensorkennlinien resultieren und auf toleranzbedingten Abweichungen der Sensorbauteile beruhen.

Vorzugsweise wird die Kompensations-Kennlinie des Sensors bei der Justage des Schienenfahrzeugs ermittelt. Es könnte beispielsweise der Wagenkasten während der Justage bewußt tordiert werden. Da die Summe aller vertikalen Kräfte in den Luftfedern bei deaktivierten Wankstützen aufgrund der konstanten Masse des Wagenkastens konstant sein muß, lassen sich über die vier während der Tordierung und Enttordierung gemessenen Drücke Rückschlüsse auf die Genauigkeit der Sensorkennlinien ziehen.

In einer weiteren bevorzugten Ausgestaltung der Erfindung werden die Meßsignale der aufgenommenen Meßgrößen durch ein Tiefpaßfilter gefiltert. Dadurch werden hochfrequente Störanteile, die nicht ausgeregelt werden sollen, aus den Meßsignalen gefiltert. Je nach Weiterverarbeitung des aufgenommenen Meßsignals kann die Grenzfrequenz des Tiefpaßfilters unterschiedlich groß gewählt werden und den entsprechenden Bedürfnissen nach zeitlicher Auflösung entsprochen werden.

In einer besonders bevorzugten Ausgestaltung der Erfindung werden die Grenzfrequenzen des Tiefpaßfilters bei der Justage und im Betrieb des Schienenfahrzeugs unterschiedlich groß gewählt. So sollte die Grenzfrequenz im Betrieb deutlich unterhalb der Eigenfrequenz des Schwingungssystems Wagenkasten gegen Fahrwerk liegen, welche etwa 1 Hertz beträgt. Als Grenzfrequenz im Betrieb könnte etwa 0,1 Hertz angesetzt werden. Während der Justage sollte die Grenzfrequenz deutlich höher im Bereich von etwa 1 bis 10 Hertz liegen.

In einer weiteren vorteilhaften Ausführungsform der Erfindung wird für die Fehlerprüfung der Höhen- und Druck-Meßwerte mittels im Steuergerät gespeicherter Modelle der Luftfedern und Regelventile die Differenz zwischen dem aus den Meßwerten berechneten Luftmassenstrom und dem geschätzten Luftmassenstrom durch die Regelventile mindestens einer der Luftfedern bestimmt und als Kontrollgröße beobachtet. Der berechnete Luftmassenstrom ergibt sich aus der zeitlichen Ableitung der Luftmassen in den Federn, die über das im Steuergerät gespeicherte Modell der Luftfeder aus den gemessenen Drücken und Höhen bestimmt wird. Davon abgezogen wird der geschätzte Luftmassenstrom, der sich aus dem durch die Regelventile zugepumpten beziehungsweise abgelassenen Luftstrom ergibt. Bei einer sprunghaften

Änderung der Kontrollgröße kann auf einen Ausfall wenigstens einer der Sensoren oder aber auf eine große Leckage geschlossen werden. Bei anhaltend negativen Werten der Kontrollgröße kann hingegen auf eine Leckage geschlossen werden, da der berechnete Luftmassenstrom kleiner ist als der ventilgesteuerte.

Zur weiteren Fehlereingrenzung auf einen bestimmten Höhen- beziehungsweise Drucksensor werden der Torsionsanteil beziehungsweise die vertikale Gesamtkraft mit jeweils vorgegebenen Funktionsgrenzen verglichen. So kann die Summe der vertikalen Kräfte beispielsweise mit der Gewichtskraft des leeren und des beladenen Schienenfahrzeuges als untere und obere Funktionsgrenze verglichen werden und bei Überschreiten auf einen fehlerhaften Drucksensor geschlossen werden. Überschreitet hingegen der Torsionsanteil eine gewisse Funktionsgrenze, kann auf einen fehlerhaften Höhensensor geschlossen werden.

In einer weiteren vorteilhaften Ausgestaltung der Erfindung wird bei fehlercharakteristischem Verhalten der Kontrollgröße und nach Eingrenzung des Fehlers auf einen bestimmten Sensors eine Fehlermeldung ausgegeben. Dies kann die Überwachung des Betriebszustandes des Schienenfahrzeugs um eine wichtige Information ergänzen, die dem Fahrer zum Anhalten des Schienenfahrzeugs bewegen kann, etwa beim Ausfall beider Sensoren einer Luftfeder.

In einer weiteren bevorzugten Ausgestaltung der Erfindung wird der Meßwert eines fehlerhaften Sensors einer Luftfeder durch einen aus einer für diese Luftfeder geschätzten Luftmasse berechneten Meßwert ersetzt. Die für eine Luftfeder geschätzte Luftmasse erhält man durch zeitliches Aufintegrieren des durch die Regelventile gesteuerten Luftmassenstroms, wobei Korrekturterme aufgrund einer Leckage in dieser Luftfeder berücksichtigt werden können. Aus der geschätzten Luftmasse kann dann über das zugrunde liegende Modell der Luftfedern ein Höhen- oder Druck-Meßwert berechnet werden, durch den der fehlerhafte gemessene Meßwert ersetzt wird, so daß für die weitere Signalverarbeitung ein vollständiger Satz von Meßwerten zur Verfügung steht.

In einer anderen vorteilhaften Ausgestaltung der Erfindung wird als weitere Meßgröße die Querbeschleunigung des Wagenkastens aufgenommen. Dadurch können Einwirkungen auf den Wagenkasten unterschieden werden, die durch eine unsymmetrische Beladung, durch eine einseitige Windlast oder aber durch eine Bogenfahrt des Schienenfahrzeugs hervorgerufen werden.

Vorzugsweise werden der Wankanteil und das Wankmoment von durch eine Bogenfahrt des Schienenfahrzeugs hervorgerufenen Querbeschleunigungsanteilen bereinigt. Als Regelziel wird nur der bereinigte Wankanteil kompensiert und als betriebsrelevante Überwachungsgröße der bereinigte wie der unbereinigte Wankanteil überwacht. Eine vollständige Kompensation des Wankanteils wäre zum einen bei häufig wechselnder Kurvenrichtung aufgrund der kurzen Fahrtdauer in der Kurve und der geringen nachpumpbaren Luftmenge nicht sinnvoll. Zum anderen würde das Fahrzeug nach Kompensation des fliehkraftbedingten Wankanteils bei Einfahrt in den Gegenbogen sich deutlich stärker neigen als ohne Kompensation. Durch den Verzicht auf die Kompensation des fliehkraftbedingten Wankanteils ergibt sich also eine Verringerung des maximalen Wankwinkels. Daneben wird die zu- und abströmende Luftmenge beziehungsweise der Luftdurchsatz deutlich gesenkt und so der Verschleiß des Kompressors reduziert sowie Energie gespart.

In einer weiteren bevorzugten Ausgestaltung der Erfindung werden die Regelventile über im Steuergerät gespeicherte Ventil-Kennlinien mit variablen Totwegen angesteuert. Die etwa software-technisch realisierten Ventil-Kennlinien können sich beispielsweise in Abhängigkeit der Fahrgeschwindigkeit ändern. So können mit zunehmender Fahrgeschwindigkeit größere Totwege in den Ventil-Kennlinien enthalten sein, so daß die Regelung erst bei immer größeren Regelabweichungen anspricht. Dadurch wird der Luftdurchsatz infolge dynamisch bedingter vertikaler Schwingungen des Wagenkastens gering gehalten. Bei der Justage des Schienenfahrzeugs werden praktisch totwegfreie Ventil-Kennlinien verwendet, so daß bis zur vollständigen Erreichung der Sollgröße, auch bei geringer Abweichung von der Istgröße, nachgeregelt wird.

Die Aufgabe wird außerdem gelöst durch eine Luftfederung gemäß dem Oberbegriff des Anspruchs 17, bei dem das Steuergerät die Regelventilegemäß einem Verfahren nach einem der Ansprüche 1 bis 1b steuert.

Durch das Aufnehmen nicht nur von Höhen, sondern auch von Drücken in den Luftfedern können fehlerhafte Meßwerte durch geschätzte Meßwerte ersetzt werden und zusätzliche Regelziele erreicht beziehungsweise betriebsrelevante Überwachungsgrößen wie Wagenkastenmomente und vertikale Gesamtkraft überwacht werden.

In einer bevorzugten Ausführungsform der Erfindung sind ein Druck-Sensor zum Aufnehmen des Luftdruckes in der Versorgungseinrichtung und ein Beschleunigungs-Sensor zum Aufnehmen der Querbeschleunigung des Wagenkastens vorgesehen. Damit wird der Luftdruck in der Versorgungseinrichtung überwacht und kann gegebenenfalls auf einem vorgegebenen Mindestniveau gehalten werden. Zusammen mit den Drücken in den Luftfedern kann damit jeweils die Druckdifferenz zwischen den beiden Seiten der Regelventile bestimmt werden, woraus der gesteuerte Luftmassenstrom in bzw. aus den Luftfedern berechnet werden kann.

Die Erfindung wird im folgenden durch ein in den Zeichnungen dargestelltes Ausführungsbeispiel näher erläutert, in deren
- FIG. 1: eine erfindungsgemäße Luftfederung für ein Schienenfahrzeug schematisch dargestellt ist und in deren
- FIG. 2: ein Ablaufdiagramm eines erfindungsgemäßen Regelverfahrens der Luftfederung dargestellt ist.

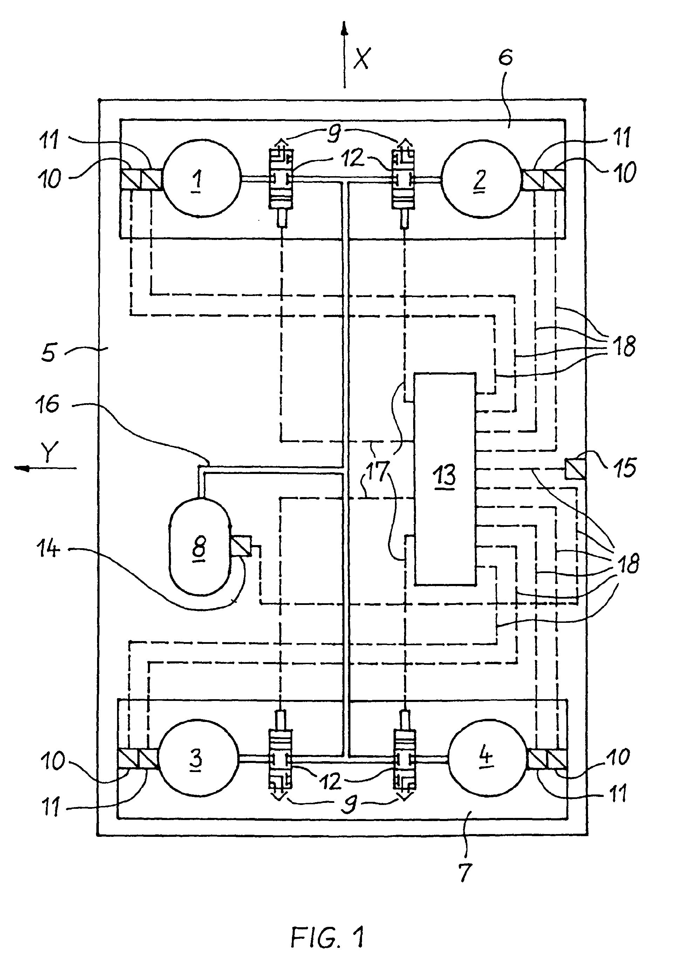

Eine Luftfederung für ein Schienenfahrzeug weist gemäß FIG. 1 als Sekundärfederstufe vier Luftfedern 1, 2, 3, 4 auf, über die sich ein Wagenkasten 5 auf zwei Fahrwerke 6, 7 abstützt. Die Fahrwerke 6, 7 umfassen jeweils nicht dargestellt einen Rahmen und entweder einen oder mehrere Radsätze oder Einzelräder jeweils über eine Primärfederstufe am Rahmen abgefedert. Zusätzlich können die Fahrwerke 6, 7 ebenfalls nicht dargestellte Antriebs- und/oder Bremseinheiten aufweisen. Die Fahrwerke 6, 7 können als echte Drehgestelle oder aber auch als einfache Laufwerke ausgebildet sein. Die Fahrwerke 6, 7 können auch in Jacobs-Bauart ausgeführt sein, wobei sich auf die Fahrwerke 6, 7 jeweils ein benachbarter nicht dargestellter Wagenkasten über zusätzliche nicht dargestellte Luftfedern abstützen kann. Die Luftfedern 1, 2, 3, 4 sitzen auf den Rahmen der Fahrwerke 6, 7 und unterstützen den Wagenkasten 5 im Bereich seiner Ecken. Die Luftfedern 1, 2, 3, 4 sind in an sich bekannter Bauweise mit Balg und Felge ausgeführt und sind je Fahrwerk 6, 7 symmetrisch zur Fahrzeugmittenlängsachse X angeordnet. Das vorlaufende Fahrwerk 6 und das nachlaufende Fahrwerk 7 sind symmetrisch zur Fahrzeugmittenquerachse Y angeordnet. Die Luftfedern 1, 2, 3, 4 sind mit einer Versorgungseinrichtung 8 über Druckluftversorgungsleitungen 16 verbunden. Die Versorgungseinrichtung 8 kann beispielsweise aus einem Drucklufttank bestehen, der über einen Kompressor mit Druckluft gespeist wird. Jeder der Luftfedern 1, 2, 3, 4 ist ein elektrisch ansteuerbares Regelventil 12 zugeordnet, das je nach Schaltstellung die zugehörige Luftfeder mit der Versorgungseinrichtung 8 verbindet, die Versorgungsleitung 16 absperrt oder die Luftfeder mit einem Luftauslaß 9 verbindet. Dadurch kann wahlweise die Luftmasse beziehungsweise der Druck in einer Luftfeder erhöht, konstant gehalten oder abgelassen werden. Jeder der Luftfedern 1, 2, 3, 4 ist ein Sensor 10 zum Aufnehmen einer Höhe Z_{N} (N = 1, ..., 4), beispielsweise eines Abstandes zwischen Wagenkasten 5 und Fahrwerkrahmen 6, 7, sowie ein Sensor 11 zum Aufnehmen eines Druckes P_{N} (N = 1, ..., 4) zugeordnet. Desweiteren ist ein Sensor 14 zum Aufnehmen des Druckes P_{T} in der Versorgungseinrichtung 8 sowie ein Sensor 15 zum Aufnehmen der in Richtung Y wirkenden Querbeschleunigung A_{Q} vorgesehen. Die aufgenommenen Meßgrößen werden in den Sensoren 10, 11, 14, 15 in entsprechende elektrische Meßsignale umgewandelt, welche über Sensorsignalleitungen 18 einem elektrischen Steuergerät 13 zugeführt werden. Im Steuergerät 13 werden die Meßsignale der aufgenommenen Meßgrößen Z_{N}, P_{N} (N = 1, ..., 4); P_{T}, A_{Q} verarbeitet und die Regelventile 12 zum Erreichen vorgegebener Regelziele über Ventilsteuerleitungen 17 angesteuert. Da mehr Meßgrößen als minimal benötigt vorliegen, kann die Plausibilität der Meßsignale der Sensoren 10, 11 geprüft und ein Sensorausfall beziehungsweise eine nennenswerte Leckage im Pneumatiksystem sicher erkannt werden.

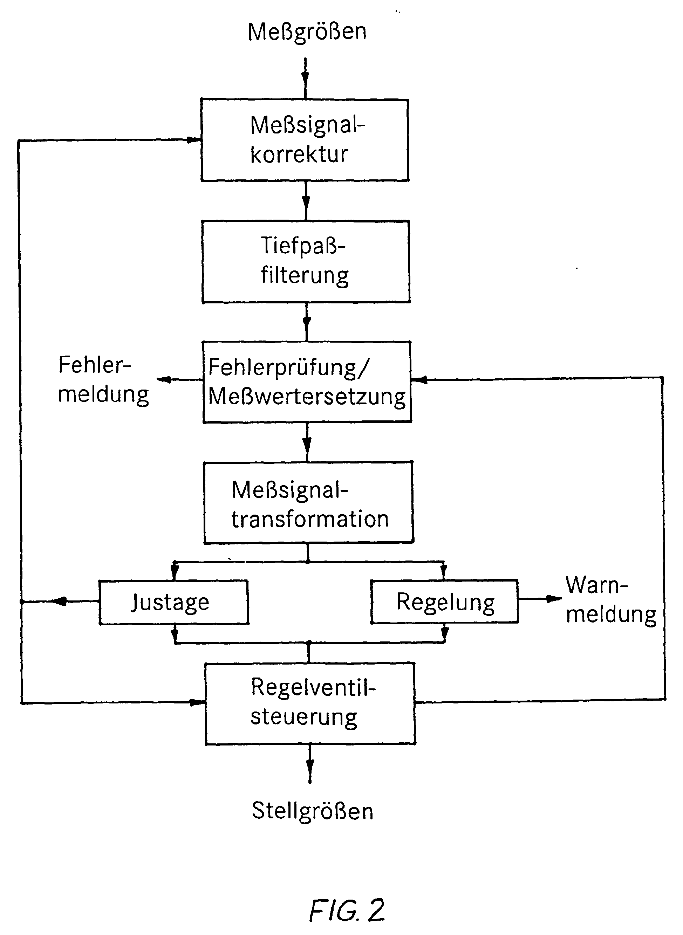

Nach dem Verfahren zum Regeln einer Luftfederung für ein Schienenfahrzeug werden gemäß FIG. 2 als "Meßgrößen" die Höhen Z_{N} und Drücke P_{N} (N = 1, ..., 4) der Luftfedern 1, 2, 3, 4 durch Sensoren 10, 11 aufgenommen und in entsprechende Meßsignale umgewandelt, um dem elektrischen Steuergerät 13 zugeführt zu werden. Desweiteren werden der Druck P_{T} in der Versorgungseinrichtung 8 durch einen Sensor 14 sowie die auf den Wagenkasten 5 wirkende Querbeschleunigung A_{Q} durch einen Sensor 15 aufgenommen und deren Meßsignal ebenfalls dem elektrischen Steuergerät 13 zugeführt. Die Querbeschleunigung A_{Q} und die Fahrgeschwindigkeit V. können eventuell auch über das Bordnetz des Schienenfahrzeuges verfügbar sein.

Da die Sensor-Kennlinien aufgrund von Bauteiltoleranzen nur eine endliche Genauigkeit aufweisen, erfolgt in einem ersten Schritt eine "Meßsignalkorrektur" mittels im elektronischen Steuergerät 13 gespeicherter Kompensations-Kennlinien der Sensoren 10, 11. Bei Verfügbarkeit von Sensoren hinreichender Genauigkeit kann dieser Verfahrensschritt entfallen.

Zur Abtrennung hochfrequenter Störanteile aus den korrigierten Meßsignalen erfolgt nun eine "Tiefpaßfilterung". Bei der Wahl der Grenzfrequenz des Tiefpaßfilters kann die Eigenfrequenz des Schwingungssystems Wagenkasten 5 gegen Fahrgestell 6, 7, die typischerweise etwa 1 Hertz beträgt, herangezogen werden. Dabei sollte die Grenzfrequenz im Betrieb des Schienenfahrzeugs bei etwa 0,1 Hertz angesetzt werden, während bei der Justage des Schienenfahrzeuges die Grenzfrequenz deutlich höher in einem Bereich von etwa 1 bis 10 Hertz liegen sollte.

Zur "Fehlerprüfung" werden aus den gefilterten Meßwerten für die Höhen Z_{N} und Drücke P_{N} über die allgemeine Gasgleichung und einem Modell der Luftfedern die Luftmassen in den Luftfedern 1, 2, 3, 4 bestimmt. Die nach der Zeit abgeleitete Luftmasse ergibt einen berechneten Luftmassenstrom für die Luftfedern 1, 2, 3, 4. Aus dem zeitlichen Verlauf der Ansteuerung der Regelventile 12 sowie mittels eines in dem elektrischen Steuergerät 13 abgespeicherten Modells der Regelventile 12 wird ein geschätzter Luftmassenstrom für die Luftfedern 1, 2, 3, 4 bestimmt. Die Differenz zwischen dem berechneten und dem geschätzten Luftmassenstrom einer Luftfeder wird als Kontrollgröße beobachtet. Springt die Kontrollgröße einer Luftfeder, so liegt offenbar ein Ausfall des zugehörigen Druck- oder Höhensensors 10, 11 oder aber auch beider Sensoren vor. Es könnte aber auch eine große Leckage in der Luftfederung vorliegen. Ist die Kontrollgröße dagegen stets negativ, so liegt offensichtlich eine Leckage vor. Zur weiteren Fehlereingrenzung wird zum einen aus den in vertikale Kräfte F_{N} umgerechneten Drücke P_{N} die vertikale Gesamtkraft F_{Z} als Summe aller vertikalen Kräfte F_{N} ermittelt. Die vertikale Gesamtkraft F_{Z} wird mit vorgegebenen Funktionsgrenzen, beispielsweise der Gewichtskraft des leeren und des beladenen Schienenfahrzeugs, verglichen. Bei Überschreitung der Funktionsgrenzen kann auf einen fehlerhaften Drucksensor 11 geschlossen werden. Entsprechend wird aus den Höhen Z_{N} der Luftfedern 1, 2, 3, 4 ein Torsionsanteil αermittelt und mit vorgegebenen Funktionsgrenzen verglichen und bei deren Überschreitung auf einen fehlerhaften Höhensensor 10 geschlossen. Bei fehlercharakteristischem Verhalten der Kontrollgröße und nach Eingrenzung des Fehlers auf einen bestimmten Sensor 10, 11 wird eine "Fehlermeldung" an den Fahrer des Schienenfahrzeugs ausgegeben. Während bei einem Ausfall beider Sensoren 10, 11 einer Luftfeder N (N = 1, 2, 3, 4) das Anhalten des Schienenfahrzeugs empfohlen werden könnte, kann bei eindeutiger Erkennung genau eines fehlerhaften Sensors 10, 11 der aufgenommene Meßwert durch einen berechneten Meßwert ersetzt werden. Für diese "Meßwertersetzung" wird zunächst die Luftmasse in dieser Luftfeder N geschätzt durch zeitliches Aufintegrieren des zuvor durch das elektrische Steuergerät 13 geregelten Luftmassenstrom durch das Regelventil 12. Aus der geschätzten Luftmasse und einem der beiden Meßwerte, etwa dem Druck P_{N}, kann über die allgemeine Gasgleichung auf den anderen Meßwert, etwa die Höhe Z_{N}, rückgeschlossen werden.

Schließlich steht ein kompletter Satz von Meßwerten, gegebenenfalls ergänzt durch ersetzte Meßwerte, für die Höhen Z_{N} und Drücke P_{N} (N = 1, ..., 4) für eine nun folgende "Meßsignaltransformation" zur Verfügung. Die Höhen Z_{N} der Luftfedern 1, 2, 3, 4 werden zerlegt in einen Wankanteil α_{X}, der einer Drehbewegung des Wagenkastens 5 um die Längsachse X entspricht, einen Nickanteil α, der einer Drehbewegung des Wagenkastens 5 um die Querachse Y entspricht, einen Torsionsanteil α_{T}, der einer Verdrehbewegung des Wagenkastens 5 um die Fahrzeuglängsachse X entspricht, und einen Hubanteil Zₙ, der einer Tauchbewegung des Wagenkastens 5 senkrecht zur X-Y-Ebene entspricht. Der Wankanteil αₓ wird nun bereinigt um die durch eine Bogenfahrt des Schienenfahrzeugs hervorgerufenen Querbeschleunigungsanteile A_{Q}. Die aufgenommenen Drücke P_{N} werden zunächst umgerechnet in vertikale Luftfederkräfte, wobei die effektive Auflagefläche der Luftfedern 1, 2, 3, 4 in die Berechnung eingeht. Aus den Höhen Z_{N} der Luftfedern und der Spezifikation der verwendeten Wankstütze des Wagenkastens 5, beispielsweise eines Torsionsstabes, werden dann die Wankstützkräfte berechnet. Aus den vertikalen Luftfederkräften und den Wankstützkräften werden schließlich auf vorgegebene Angriffspunkte des Wagenkastens 5 wirkende vertikale Kräfte F_{N} (N = 1, ..., 4) berechnet. Die Angriffspunkte können beispielsweise die Eckpunkte des Wagenkastens 5 sein, oder aber auch die Mittelpunkte der Auflageflächen der Luftfedern 1, 2, 3, 4. Die vertikalen Kräfte F_{N} werden dann zerlegt in ein Wankmoment M_{X}, das einem Drehmoment des Wagenkastens 5 um die Längsachse X entspricht, in ein Nickmoment M_{Y}, das einem Drehmoment des Wagenkastens 5 um die Querachse Y entspricht, einem Torsionsmoment M_{T}, das einem Verspannmoment des Wagenkastens 5 um die X-Achse entspricht, und einer vertikalen Gesamtkraft F_{Z}, die der Summe der vertikalen Kräfte F_{N} entspricht. Neben diesen Wagenkasten-bezogenen Größen werden noch -Fahrwerkbezogene Kräfterverhältnisse Δ₄ beziehungsweise Δ₇, als Verhältnis der Differenz und der Summe der vertikalen Kräfte F₁ und F₂ beziehungsweise F₂ und F₁. Abschließend wird noch das um die Querbeschleunigungsanteile A_{Q} bereinigte Wankmoment bestimmt.

Auf der Grundlage dieser Meßsignaltransformation werden nun in der "Regelung" mögliche Abweichungen von Regelzielen festgestellt. Zur Einhaltung des Lichtraumprofiles kann als Regelziel die Kompensation des bereinigten Wankanteils α_{X} und des Nickanteils α_{Y} sowie das Halten des Hubanteils Z_{H} auf einem Sollwert vorgegeben werden. Zur Verspannungsfreiheit des Wagenkastens 5 kann als Regelziel die Kompensation des Torsionsmoments M_{T} angestrebt werden, oder alternativ dazu zur Erhöhung der Entgleisungssicherheit die Kräfteverhältnisse Δ₆ und Δ₇ je Fahrwerk 6, 7 minimiert werden .Bei der Regelung kann der Betriebszustand des Schienenfahrzeugs durch Vergleichen von betriebsrelevanten Überwachungsgrößen mit jeweils zugeordneten Funktionsbereichen überwacht werden. Neben den Regelzielgrößen, wie die Fahrwerk-bezogenen Kräfteverhältnisse Δ_{6 7}, das Torsionsmoment M_{T}, der bereinigte Wankanteil α_{X}, der Nickanteil α_{Y} und der Hubanteil Z_{H}, können auch die Drücke P_{N} der Luftfedern 1, 2, 3, 4 zum Erkennen großer Leckagen oder des Versagens einer Luftfeder, und das bereinigte Wankmoment M_{Z} zum Erkennen unsymmetrischer Beladungszustände oder starker Windlasten überwacht werden. Verlassen die Werte der Überwachungsgrößen den jeweils vorgegebenen Funktionsbereich, so kann eine entsprechende "Warnmeldung" an den Fahrer des Schienenfahrzeugs ausgegeben werden. In vorteilhafter Weise können dynamische Funktionsbereiche für die Überwachungsgrößen vorgesehen sein, die in Abhängigkeit von den Betriebsbedingungen wie etwa der Fahrgeschwindigkeit V_{X} des Schienenfahrzeugs variabel sind.

In der "Regelventilsteuerung" werden nun die Regelventile 12 durch das elektrische Steuergerät 13 derart angesteuert, daß die vorgegebenen Regelziele erreicht werden. Dazu werden erkannte Regelzielabweichungen durch Zu- bzw. Abströmen von Luftmassen als "Stellgrößen" beseitigt, in dem Druckluft aus der Versorgungseinrichtung 8 in eine oder mehrere der Luftfedern 1, 2, 3, 4 gepumpt oder über den Luftauslaß 9 daraus in die Umgebung abgelassen wird. Dabei können die Regelventile 12 über im Steuergerät 13 gespeicherte Ventil-Kennlinien mit variablen Totwegen angesteuert werden. Im Betrieb des Schienenfahrzeugs können beispielsweise totwegbehaftete Ventil-Kennlinien verwendet werden, damit die Regelventile 12 erst ab einem bestimmten Schwellenwert des Steuerimpulses öffnen. Hierdurch wird vermieden, daß kleine Regelzielabweichungen abgeglichen werden, was den Druckluftverbrauch und damit den Energieverbrauch des Kompressors senkt.

Bei der "Justage" des Schienenfahrzeugs hingegen werden Ventil-Kennlinien verwendet, die keinen Totweg aufweisen, so daß eine hohe Genauigkeit bei der Einstellung des Systems Wagenkasten 5, Luftfederung 1, 2, 3, 4 und Fahrwerke 6, 7 für einen sicheren Betrieb des Schienenfahrzeugs gegeben ist. Bei der Justage des Schienenfahrzeugs können auch die Kompensations-Kennlinien der Sensoren 10, 11 sowie die optimalen Ventil-Kennlinien ermittelt und für die Meßsignalkorrektur beziehungsweise die Regelventilsteuerung zur Verfügung gestellt werden. Die Steuervorgänge der Regelventile 12 werden während der Regelventilsteuerung aufgezeichnet, so daß eine Abschätzung der momentan in den Luftfedern 1, 2, 3, 4 vorhandenen Luftmassen durch zeitliches Aufintegrieren des über die Regelventile 12 eingepumpten beziehungsweise abgelassenen Luftmassenstroms möglich ist, was für die Meßwertersetzung bei einem als fehlerhaft erkannten Sensor 10, 11 nötig ist.

Durch den vorbeschriebenen elektrischen, Wagenkasten- beziehungsweise Triebzugweit zentralen Regelansatz für die Luftfederung von Schienenfahrzeugen wird der Einsatz von mechanisch-pneumatischen Komponenten vermieden und eine modellbasierte Ermittlung und Überwachung des Betriebszustandes des Schienenfahrzeuges möglich. Durch den flexiblen software-basierten Regelungsansatz können auch dynamische Ventil-Kennlinien sowie der Ausgleich von Bauteiltoleranzen insbesondere der Sensoren per Software-Einstellung vorgesehen werden. Es wird ein Erkennen von Fehlern und kritischen Betriebszuständen ermöglicht, sowie eine vereinfachte, halbautomatische Justage der Luftfederung des Schienenfahrzeuges. Es kann auch eine statistische Auswertung der Betriebszustände während der Fahrt erfolgen, was die Wartung vereinfacht und die Betriebssicherheit des Schienenfahrzeugs erhöht.

## Patentansprüche

1. Verfahren zum Regeln einer Luftfederung für ein Schienenfahrzeug mit mindestens einem Wagenkasten (5), der sich über Luftfedern (1, 2, 3, 4) auf wenigstens ein Fahrwerk (6, 7) abstützt, wobei Meßgrößen von Sensoren (10, 11) aufgenommen und in entsprechende Meßsignale umgewandelt werden und wobei die Meßsignale einem elektrischen Steuergerät (13) zugeführt werden, welches Regelventile (12) zum Erreichen von Regelzielen elektrisch ansteuert, um Luft in Luftfedern (1, 2, 3, 4) ein- bzw. daraus ausströmen zu lassen, **dadurch gekennzeichnet,**
- **daß** als Meßgrößen die Höhen (Z₁, Z₂, Z₃, Z₄) und Drücke (P₁, P₂, P₃, P₄) der Luftfedern (1, 2, 3, 4) aufgenommen werden,
- **daß** die Meßsignale auf Fehler geprüft werden,
- **daß** die Höhen-Meßwerte (Z₁, Z₂, Z₃, Z₄) in einen Wagenkasten-bezogenen Wank- (α_{X}) und/oder Nick- (α_{y}) und/oder Torsions- (α_{T}) und/oder Hubanteil (Z_{H}) transformiert werden,
- **daß** aus den Druck-Meßwerten (P₁, P₂, P₃, P₄) auf den Wagenkasten (5) wirkende vertikale Kräfte (F₁, F₂, F₃, F₄) berechnet werden,
- **daß** die vertikalen Kräfte (F₁, F₂, F₃, F₄) in ein Wagenkasten-bezogenes Wank- (M_{X}) und/oder Nick- (M_{Y}) und/oder Torsionsmoment (M_{T}) und/oder eine vertikale Gesamtkraft (F_{Z}) und/oder in je ein Fahrwerk-bezogenes Kräfteverhältnis (Δ₅, Δ₆) transformiert werden,
- und **daß** als Regelziele der Wankanteil (α_{X}) kompensiert und/oder der Nickanteil (α_{Y}) kompensiert und/oder der Hubanteil (Z_{H}) auf einem bestimmten Sollwert gehalten und/oder entweder das Kräfteverhältnis (Δ₅, Δ₆) je Fahrwerk (6, 7) minimiert oder das Torsionsmoment (M_{T}) kompensiert werden sollen.

2. Verfahren nach Anspruch 1, **dadurch gekennzeichnet, daß** fehlerhafte Meßwerte durch geschätzte Meßwerte ersetzt werden.

3. Verfahren nach Anspruch 1 oder 2, **dadurch gekennzeichnet, daß** der Betriebszustand des Schienenfahrzeugs durch Vergleichen von betriebsrelevanten Überwachungsgrößen mit jeweils zugeordneten Funktionsbereichen überwacht und bei Verlassen eines Funktionsbereichs eine entsprechende Warnmeldung ausgegeben wird.

4. Verfahren nach Anspruch 3, **dadurch gekennzeichnet, daß** als betriebsrelevante Überwachungsgrößen die Fahrwerk-bezogenen Kräfteverhältnisse (Δ₅, Δ₆) und/oder das Torsionsmoment (M_{T}) und/oder der Wankanteil (α_{X}) und/oder der Nickanteil (α_{Y}) und/oder der Hubanteil (Z_{H}) und/oder das Wankmoment (M_{X}) und/oder die Druck-Meßwerte (P₁, P₂, P₃, P₄) überwacht werden.

5. Verfahren nach Anspruch 3 oder 4, **dadurch gekennzeichnet, daß** die Funktionsbereiche für die Überwachungsgrößen variabel in Abhängigkeit von Betriebsbedingungen des Schienenfahrzeugs sind.

6. Verfahren nach einem der Ansprüche 1 bis 5, **dadurch gekennzeichnet, daß** ein von einem Sensor (10, 11) dem Steuergerät (13) zugeführtes Meßsignal mittels einer im Steuergerät (13) gespeicherten Kompensations-Kennlinie dieses Sensors (10, 11) korrigiert wird.

7. Verfahren nach Anspruch 6, **dadurch gekennzeichnet, daß** die Kompensations-Kennlinie des Sensors (10, 11) bei der Justage des Schienenfahrzeugs ermittelt wird.

8. Verfahren nach einem der Ansprüche 1 bis 7, **dadurch gekennzeichnet, daß** die Meßsignale der aufgenommenen Meßgrößen (Z₁, Z₂, Z₃, Z₄, P₁, P₂, P₃, P₄) durch ein Tiefpaßfilter gefiltert werden.

9. Verfahren nach Anspruch 8, **dadurch gekennzeichnet, daß** die Grenzfrequenzen des Tiefpaßfilters bei der Justage und im Betrieb des Schienenfahrzeugs unterschiedlich groß gewählt werden.

10. Verfahren nach einem der Ansprüche 1 bis 9, **dadurch gekennzeichnet, daß** für die Fehlerprüfung der Höhen- und Druck-Meßwerte (Z₁, Z₂, Z₃, Z₄, P₁, P₂, P₃, P₄) mittels im Steuergerät (13) gespeicherter Modelle der Luftfedern (1, 2, 3, 4) und Regelventile (12) die Differenz zwischen dem aus den Meßwerten (Z₁, Z₂, Z₃, Z₄, P₁, P₂, P₃, P₄) berechneten Luftmassenstrom und dem geschätzten Luftmassenstrom durch die Regelventile (12) mindestens einer der Luftfedern (1, 2, 3, 4) bestimmt und als Kontrollgröße beobachtet wird.

11. Verfahren nach Anspruch 10, **dadurch gekennzeichnet, daß** zur weiteren Fehlereingrenzung auf einen bestimmten Höhen- bzw. Druck-Sensor (10, 11) der Torsionsanteil (α_{T}) bzw. die vertikale Gesamtkraft (F_{Z}) mit jeweils vorgegebenen Funktionsgrenzen verglichen werden.

12. Verfahren nach Anspruch 10 oder 11, **dadurch gekennzeichnet, daß** bei fehlercharakteristischem Verhalten der Kontrollgröße und nach Eingrenzung des Fehlers auf einen bestimmten Sensor (10, 11) eine Fehlermeldung ausgegeben wird.

13. Verfahren nach einem der Ansprüche 10 bis 12, **dadurch gekennzeichnet, daß** der Meßwert eines fehlerhaften Sensors (10, 11) einer Luftfeder (1, 2, 3, 4) durch einen aus einer für diese Luftfeder (1, 2, 3, 4) geschätzten Luftmasse berechneten Meßwert ersetzt wird.

14. Verfahren nach einem der Ansprüche 1 bis 13, **dadurch gekennzeichnet, daß** als weitere Meßgröße die Querbeschleunigung (A_{Q}) des Wagenkastens (5) aufgenommen wird.

15. Verfahren nach Anspruch 14, **dadurch gekennzeichnet, daß** der Wankanteil (α_{X}) und das Wankmoment (M_{X}) von durch eine Bogenfahrt des Schienenfahrzeugs hervorgerufenen Querbeschleunigungsanteilen (A_{Q}) bereinigt werden.

16. Verfahren nach einem der Ansprüche 1 bis 15, **dadurch gekennzeichnet, daß** die Regelventile (12) über im Steuergerät (13) gespeicherte Ventil-Kennlinien mit variablen Totwegen angesteuert werden.

17. Luftfederung für ein Schienenfahrzeug mit mindestens einem Wagenkasten (5), der sich über Luftfedern (1, 2, 3, 4) auf wenigstens ein Fahrwerk (6, 7) abstützt, welche eine Versorgungseinrichtung (8) zum Bereitstellen von Druckluft für die Luftfedern (1, 2, 3, 4), einen Luftauslaß (9) zum Ablassen von Luft aus den Luftfedern (1, 2, 3, 4) in die Umgebung, Sensoren (10, 11) zum Aufnehmen von Meßgrößen (Z₁, Z₂, Z₃, Z₄, P₁, P₂, P₃, P₄), Regelventile (12) zum Steuern des Luftstroms zwischen den Luftfedern (1, 2, 3, 4) und der Versorgungseinrichtung (8) oder dem Luftauslaß (9) und ein elektrisches Steuergerät (13) aufweist, welches die Meßsignale der aufgenommenen Meßgrößen (Z₁, Z₂, Z₃, Z₄, P₁, P₂, P₃, P₄) verarbeitet und die Regelventile (12) zum Erreichen von Regelzielen steuert, wobei für die Luftfedern (1, 2, 3, 4) jeweils ein Höhen-Sensor (10) zum Aufnehmen einer Höhe (Z₁, Z₂, Z₃, Z₄) zwischen Wagenkasten (5) und Fahrwerk (6, 7) und jeweils ein Druck-Sensor (11) zum Aufnehmen des Drucks (P₁, P₂, P₃, P₄) in der jeweiligen Luftfeder (1, 2, 3, 4) vorgesehen sind, **dadurch gekennzeichnet, daß** das Steuergerät (13) die Regelventile (12) gemäß einem Verfahren nach einem der Ansprüche 1 bis 16 steuert.

18. Luftfederung nach Anspruch 17, **dadurch gekennzeichnet, daß** ein Druck-Sensor (14) zum Aufnehmen des Luftdruckes (P_{T}) in der Versorgungseinrichtung (8) und ein Beschleunigungs-Sensor (15) zum Aufnehmen der Querbeschleunigung (A_{Q}) des Wagenkastens (5) vorgesehen sind.

## Claims

1. Method for the control of a pneumatic suspension for a railway vehicle with at least one wagon body (5) supported by means of pneumatic springs (1, 2, 3, 4) on at least one running gear (6, 7), measurement variables being recorded by sensors (10, 11) and converted into corresponding measurement signals and the measurement signals being fed to an electric controller device (13), which activates control valves (12) to reach control aims to allow air to flow in and out of pneumatic springs (1, 2, 3, 4), **characterised in that**
- the heights (Z₁, Z₂, Z₃, Z₄) and pressures (P₁, P₂, P₃, P₄) of the pneumatic springs (1, 2, 3, 4) are recorded as measurement variables,
- the measurement signals are checked for errors,
- the height measurement values (Z₁, Z₂, Z₃, Z₄) are transformed into a wagon body-related roll fraction (α_{X}) and/or pitch fraction (α_{Y}) and/or torsional fraction (α_{T}) and/or lifting fraction (Z_{H}),
- vertical forces (F₁, F₂, F₃, F₄) acting on the wagon body (5) are calculated from the pressure measurement values (P₁, P₂, P₃, P₄),
- the vertical forces (F₁, F₂, F₃, F₄) are transformed into a wagon body-related roll moment (M_{X}) and/or pitch moment (M_{Y}) and/or torsional moment (M_{T}) and/or a vertical total force (F_{Z}) and/or into a respective running gear-related force ratio (Δ₅, Δ₆),
- and **in that**, as the control aims, the roll fraction (α_{X}) is to be compensated and/or the pitch fraction (α_{Y}) is to be compensated and/or the lifting fraction (Z_{H}) is to be kept at a specific desired value and/or either the force ratio (Δ₅, Δ₆) for each running gear (6, 7) is to be minimised or the torsional moment (M_{T}) is to be compensated.

2. Method according to claim 1, **characterised in that** faulty measurement values are replaced by estimated measurement values.

3. Method according to claim 1 or 2, **characterised in that** the operating state of the railway vehicle is monitored by comparing operation-relevant monitoring variables with respective associated functional areas and, on leaving a functional area, a corresponding warning signal is emitted.

4. Method according to claim 3, **characterised in that**, as operation-relevant monitoring variables, the running gear-related force ratios (Δ₅, Δ₆) and/or the torsional moment (M_{T}) and/or the roll fraction (α_{X}) and/or the pitch fraction (α_{Y}) and/or the lifting fraction (Z_{H}) and/or the roll moment (M_{X}) and/or the pressure measurement values (P₁, P₂, P₃, P₄) are monitored.

5. Method according to claim 3 or 4, **characterised in that** the functional areas for the monitoring variables are variable as a function of operating conditions of the railway vehicle.

6. Method according to any one of claims 1 to 5, **characterised in that** a measurement signal fed by a sensor (10, 11) to the controller device (13) is corrected by means of a compensation characteristic of this sensor (10, 11) stored in the controller device (13).

7. Method according to claim 6, **characterised in that** the compensation characteristic of the sensor (10, 11) is determined during the adjustment of the railway vehicle.

8. Method according to any one of claims 1 to 7, **characterised in that** the measurement signals of the recorded measurement variables (Z₁, Z₂, Z₃, Z₄, P₁, P₂, P₃, P₄) are filtered by a low-pass filter.

9. Method according to claim 8, **characterised in that** the cut-off frequencies of the low-pass filter are selected to be of different sizes during the adjustment and operation of the railway vehicle.

10. Method according to any one of claims 1 to 9, **characterised in that**, for the error checking of the height and pressure measurement values (Z₁, Z₂, Z₃, Z₄, P₁, P₂, P₃, P₄), by means of models of the pneumatic springs (1, 2, 3, 4) and control valves (12) stored in the controller device (13), the difference between the air mass flow calculated from the measurement values (Z₁, Z₂, Z₃, Z₄, P₁, P₂, P₃, P₄) and the estimated air mass flow through the control valves (12) of at least one of the pneumatic springs (1, 2, 3, 4) is determined and observed as a control variable.

11. Method according to claim 10, **characterised in that** for further error localisation to a specific height or pressure sensor (10, 11), the torsional fraction (α_{T}) or the vertical total force (F_{Z}) are compared with respectively predetermined functional limits.

12. Method according to claim 10 or 11, **characterised in that**, on a behaviour characteristic of errors of the control variable and after localisation of the error to a specific sensor (10, 11), an error signal is emitted.

13. Method according to any one of claims 10 to 12, **characterised in that** the measurement value of a faulty sensor (10, 11) of a pneumatic spring (1, 2, 3, 4) is replaced by a measurement value calculated from an air mass estimated for this pneumatic spring (1, 2, 3, 4).

14. Method according to any one of claims 1 to 13, **characterised in that** the transverse acceleration (A_{Q}) of the wagon body (5) is recorded as a further measurement variable.

15. Method according to claim 14, **characterised in that** the roll fraction (α_{X}) and the roll moment (M_{X}) are corrected for transverse acceleration fractions (A_{Q}) caused by curve travel of the railway vehicle.

16. Method according to any one of claims 1 to 15, **characterised in that** the control valves (12) are activated by valve characteristics stored in the controller device (13) and having variable dead paths.

17. Pneumatic suspension for a railway vehicle with at least one wagon body (5), which is supported via pneumatic springs (1, 2, 3, 4) on at least one running gear (6, 7), comprising a supply device (8) for providing compressed air for the pneumatic springs (1, 2, 3, 4), an air outlet (9) for letting out air from the pneumatic springs (1, 2, 3, 4) into the environment, sensors (10, 11) for recording measurement variables (Z₁, Z₂, Z₃, Z₄, P₁, P₂, P₃, P₄), control valves (12) for controlling the air flow between the pneumatic springs (1, 2, 3, 4) and the supply device (8) or the air outlet (9) and an electric controller device (13), which processes the measurement signals of the recorded measurement variables (Z₁, Z₂, Z₃, Z₄, P₁, P₂, P₃, P₄) and controls the control valves (12) to reach control aims, a respective height sensor (10) for recording a height (Z₁, Z₂, Z₃, Z₄) between wagon body (5) and running gear (6, 7) and a respective pressure sensor (11) for recording the pressure (P₁, P₂, P₃, P₄) in the respective pneumatic spring (1, 2, 3, 4) being provided for the pneumatic springs (1, 2, 3, 4), **characterised in that** the controller (13) controls the control valves (12) according to a method according to any one of claims 1 to 16.

18. Pneumatic suspension according to claim 17, **characterised in that** a pressure sensor (14) is provided to record the air pressure (P_{T}) in the supply device (8) and an acceleration sensor (15) is provided to record the transverse acceleration (A_{Q}) of the wagon body (5).

## Revendications

1. Procédé de réglage d'une suspension pneumatique pour un véhicule ferroviaire comprenant au moins une caisse (5) appuyée sur au moins un châssis (6, 7) à travers des ressorts pneumatiques (1, 2, 3, 4), des capteurs (10, 11) enregistrant des grandeurs de mesure convertis en signaux de mesure correspondants et lesdits signaux de mesure alimentant un appareil de commande électrique (13) activant des soupapes de réglage (12) pour atteindre des objectifs de réglage en laissant affluer et effluer de l'air dans les ressorts pneumatiques (1, 2, 3, 4) **caractérisé en ce que**
- les hauteurs (Z₁, Z₂, Z₃, Z₄) et les pressions (P₁, P₂, P₃, P₄) des ressorts pneumatiques (1, 2, 3, 4) sont enregistrées comme grandeurs de mesures,
- les erreurs des signaux de mesure sont examinées,
- les valeurs de mesure de hauteur (Z₁, Z₂, Z₃, Z₄) sont transformées en fraction, relative à la caisse, de roulis (α_{X}) et/ou de tangage (α_{Y}) et/ou de torsion (α_{T}) et/ou de levage (Z_{H}),
- des forces verticales (F₁, F₂, F₃, F₄) agissant sur la caisse (5) sont calculées à partir des valeurs de mesure de pression (P₁, P₂, P₃, P₄),
- les forces verticales (F₁, F₂, F₃, F₄) sont transformées en un moment, relatif à la caisse, de roulis (M_{X}) et/ou de tangage (M_{Y}) et/ou de torsion (M_{T}) et/ou en une force générale verticale (F_{Z}) et/ou en un rapport de force (Δ₅, Δ₆) respectif relatif au châssis,
- et **en ce que**, comme objectifs de réglage, la fraction de roulis (α_{X}) et/ou la fraction de tangage (α_{Y}) soit compensée et/ou la fraction de levage (Z_{H}) soit maintenue sur une valeur de consigne déterminée et/ou soit le rapport de force (Δ₅, Δ₆) soit minimisé pour chaque train der roulement (6, 7), soit le moment de torsion (M_{T}) soit compensé.

2. Procédé selon la revendication 1, **caractérisé en ce que** les valeurs de mesure erronées soient remplacées par des valeurs de mesure estimées.

3. Procédé selon la revendication 1 ou 2, **caractérisé en ce que** l'état d'opération du véhicule ferroviaire est surveillé par la comparaison des grandeurs de contrôle relatives au fonctionnement avec les plages fonctionnelles associées et qu'en cas de dépassement d'une plage fonctionnelle, un message d'avertissement correspondant est émis.

4. Procédé selon la revendication 3, **caractérisé en ce que**, comme des grandeurs de contrôle relatives au fonctionnement, les rapports de force (Δ₅, Δ₆) relatifs au véhicule et/ou le moment de torsion (M_{T}) et/ou la fraction de roulis (α_{X}) et/ou la fraction de tangage (α_{Y}) et/ou la fraction de levage (Z_{H}) et/ou le moment de roulis (M_{X}) et/ou les valeurs de mesure de pression (P₁, P₂, P₃, P₄) sont surveillées.

5. Procédé selon la revendication 3 ou 4, **caractérisé en ce que** les plages fonctionnelles pour les grandeurs de contrôle sont variables en fonction des conditions d'opération du véhicule ferroviaire.

6. Procédé selon l'une des revendications 1 à 5, **caractérisé en ce qu'**un signal de mesure alimenté par un capteur (10, 11) de l'appareil de commande (13) est corrigé en fonction d'une courbe caractéristique de compensation de ce capteur (10, 11) mémorisée dans ledit appareil de commande (13).

7. Procédé selon la revendication 6, **caractérisé en ce que** la courbe caractéristique de compensation du capteur (10, 11) est déterminée au cours de l'ajustage du véhicule ferroviaire.

8. Procédé selon l'une des revendications 1 à 7, **caractérisé en ce que** les signaux de mesure des grandeurs de mesure enregistrées (Z₁, Z₂, Z₃, Z₄, P₁, P₂, P₃, P₄) sont filtrés à travers un filtre passe-bas.

9. Procédé selon la revendication 8, **caractérisé en ce que** les valeurs des fréquences de coupure du filtre passe-bas sent sélectionnées à être différentes pour l'ajustage et le fonctionnement du véhicule ferroviaire.

10. Procédé selon l'une des revendications 1 à 9, **caractérisé en ce que**, aux fins de l'examen d'erreur des valeurs de mesure de hauteur et de pression (Z₁, Z₂, Z₃, Z_{4,} P₁, P₂, P₃, P₄) utilisant les modèles de ressorts pneumatiques (1, 2, 3, 4) et de soupapes de réglage (12) mémorisés dans l'appareil de commande (13), la différence entre le débit de masse de l'air calculé à partir desdites valeurs de mesure (Z₁, Z₂, Z₃, Z₄, P₁, P₂, P₃, P₄) et le débit de masse estimatif de l'air à travers les soupapes de réglage (12) pour au moins l'un des ressorts pneumatiques (1, 2, 3, 4) est déterminée et observée comme grandeur de contrôle.

11. Procédé selon la revendication 10, **caractérisé en ce qu'**en vue d'une limitation supplémentaire des erreurs sur un capteur de hauteur ou de pression (10, 11) déterminé, la fraction de torsion (α_{T}) ou la force générale verticale (F_{Z}) sont comparées avec les limites fonctionnelles préalablement fixées.

12. Procédé selon la revendication 10 ou 11, **caractérisé en ce qu'**un message d'avertissement est émis en cas de comportement caractéristique d'erreur de la grandeur de contrôle et après limitation de l'erreur sur un capteur déterminé (10, 111).

13. Procédé selon l'une des revendications 10 à 12, **caractérisé en ce que** la valeur de mesure de l'un des capteurs erronés (10, 11) de l'un des ressorts pneumatiques (1, 2, 3, 4) est remplacée par une valeur de mesure calculée à partir d'une masse d'air estimative pour ledit ressort pneumatique (1, 2, 3, 4).

14. Procédé selon l'une des revendications 1 à 13, **caractérisé en ce que** l'accélération transversale (A_{Q}) de la caisse (5) est enregistrée comme grandeur de mesure complémentaire.

15. Procédé selon la revendication 14, **caractérisé en ce que** la fraction de roulis (α_{X}) et le moment de roulis (M_{X}) sont épurés de la fraction d'accélération transversale (A_{Q}) générée par un virage du véhicule ferroviaire.

16. Procédé selon l'une des revendications 1 à 15, **caractérisé en ce que** les soupapes de réglage (12) sont commandées en fonction d'une courbe de soupape à courses libre variables mémorisée dans l'appareil de commande (13).

17. Suspension pneumatique pour un véhicule ferroviaire comprenant au moins une caisse (5), qui s'appuie par des ressorts pneumatiques (1, 2, 3, 4) sur au moins un châssis (6, 7), comprenant un dispositif d'alimentation (8) de mise à disposition d'air comprimé pour les ressorts pneumatiques (1, 2, 3, 4), une sortie d'air (9) de rejet de l'air des ressorts pneumatiques (1, 2, 3, 4) dans l'environnement, des capteurs (10, 11) d'enregistrement de grandeurs de mesure (Z₁, Z₂, Z₃, Z₄, P₁, P₂, P₃, P₄), des soupapes de réglage (12) de contrôle du flux d'air entre les ressorts pneumatiques (1, 2, 3, 4) et le dispositif d'alimentation (8) ou la sortie d'air (9) et un appareil de commande électrique (13) qui traite les signaux de mesure des grandeurs de mesures enregistrées (Z₁, Z₂, Z₃, Z₄, P₁, P₂, P₃, P₄) et active les soupapes de réglage en vue d'atteindre les objectifs de réglage (12), les ressorts pneumatiques (1, 2, 3, 4) étant chacun muni d'un capteur de hauteur (10) pour enregistrer certaines hauteurs (Z₁, Z₂, Z₃, Z₄) entre caisse (5) et châssis (6, 7) et chacun d'un capteur de pression (11) pour enregistrer la pression (P₁, P₂, P₃, P₄) dans chaque ressort pneumatique (1, 2, 3, 4) et **caractérisé en ce que** l'appareil de commande électrique (13) active les soupapes de réglage (12) suivant un procédé selon l'une des revendications 1 à 16.

18. Suspension pneumatique selon la revendication 17, **caractérisé en ce qu'**un capteur de pression (14) enregistrant la pression (P_{T}) dans le dispositif d'alimentation (8) et un capteur d'accélération (15) enregistrant l'accélération transversale (A_{Q}) de la caisse (5) sont prévus.
